# EUROPÄISCHE PATENTSCHRIFT

(11) **EP 2 678 198 B1**
(45) Veröffentlichungstag und Bekanntmachung des Hinweises auf die Patenterteilung: **19.08.2020**
(21) Anmeldenummer: 12705835.2
(22) Anmeldetag: 16.02.2012
(51) Int. Cl.: B60S 1/38

(54) **VERFAHREN ZUM HERSTELLEN VON WISCHBLÄTTERN SOWIE EIN WISCHBLATT ZUM WISCHEN VON SCHEIBEN**
METHOD FOR PRODUCING WIPER BLADES AND WIPER BLADE FOR WIPING PANES
PROCÉDÉ DE FABRICATION DE BALAIS D'ESSUIE-GLACE ET BALAI D'ESSUIE-GLACE POUR NETTOYER DES VITRES

(30) Priorität: 24.02.2011 DE 102011004628
(43) Veröffentlichungstag der Anmeldung: 01.01.2014
(73) Patentinhaber: Robert Bosch GmbH, 70442 Stuttgart (DE)
(72) Erfinder: ENDRES, Wolfgang, 76532 Baden-Baden (DE); CRABBE, Ruddy, B-3350 Linter (Neerhespen) (BE)
(86) Internationale Anmeldenummer: PCT/EP2012/052708
(87) Internationale Veröffentlichungsnummer: WO 2012/113712

(56) Entgegenhaltungen:
- EP-A2- 2 287 052
- WO-A1-02/34597
- WO-A1-2005/102801
- WO-A2-2008/036894
- DE-A1-102007 012 700
- DE-A1-102009 002 411

## Beschreibung

### Stand der Technik

Bei Wischblättern der im Oberbegriff des Anspruchs 1 bezeichneten Art soll das Tragelement über das gesamte vom Wischblatt bestrichene Wischfeld eine möglichst gleichmäßige Verteilung des vom Wischerarm ausgehenden Wischblatt-Anpressdrucks an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärische gekrümmten Fahrzeugscheiben bei jeder Wischblattposition ändern. Die Krümmung des Wischblatts muss also etwas stärker sein als die im Wischfeld an der zu wischenden Scheibe gemessene stärkste Krümmung. Am Tragelement ist eine Anschlussvorrichtung befestigt, über die die Verbindung zum Wischerarm hergestellt wird.

Aus der EP 0914269 B1 ist es bekannt, die Anschlussvorrichtung mittels einer Schweißverbindung am Tragelement zu befestigen. Dazu wird das entweder aus Metall oder einem Kunststoff bestehende wischblattseitige Verbindungselement auf das Tragelement aufgebracht oder aufgeschoben und mittels einer Widerstandsschweißung im Falle eines metallenen Verbindungselements oder mittels einer Ultraschallschweißung im Falle eines Kunststoff-Verbindungselements stoffschlüssig mit dem Tragelement verbunden. Diese Schweißverbindung ist im Alltag extremen Bedingungen ausgesetzt und muss hohen Drehmomenten und Vibrationen auch bei unterschiedlichen Witterungsbedingungen standhalten Insbesondere bei den in großen Stückzahlen hergestellten Wischblättern stellt eine Schweißverbindung hohe Qualitätsanforderungen an die Prozessführung und verteuert damit das Wischblatt, was gerade bei Massenprodukten zu vermeiden ist.

Ein Verfahren nach dem Oberbegriff des Anspruchs 1 ist beispielsweise aus der DE 10 2009 002 411 A1 bekannt. Weiterer Stand der Technik ist aus der WO 2005/102801 A1 bekannt.

### Vorteile der Erfindung

Das erfindungsgemäße Verfahren zum Herstellen eines Wischblatts nach Anspruch 1 hat den Vorteil, dass sich das Wischblatt sehr kostengünstig herstellen lässt. In der Regel besteht das Tragelement aus gezogenen oder gewalzten Schienen, die kostenneutral in engen Toleranzen bezogen werden können, während das wischblattseitige Teil aus Blech gefaltet oder spritzgegossenen ist. Auch in diesem Fall sind in die notwendigen Toleranzen problemlos darzustellen. Dadurch, dass nach dem Zusammenfügen der Teile eine Wärmebehandlung erfolgt, ist es jedoch nicht notwendig auf sehr enge Toleranzen zu achten. Die Wärmebehandlung stellt sicher, dass sich die Elemente des Tragelements und des wischblattseitigen Teils eng aneinander anlegen und zumindest einen kraftschlüssigen Verbund schaffen. Durch eine entsprechende Oberflächenbeschaffenheit oder auch Stoffauswahl kann auch erreicht werden, dass sich die Teile ineinander verkrallen oder gar miteinander verkleben.

Bevorzugt wirkt die Wärmebehandlung auf krallenartige Ansätze des wischblattseitigen Teils, die sich in ihrer Form und/oder Ausdehnung so verändern, dass sie sich eng an das Tragelement anlegen.

Wird die Wärmebehandlung auf das Tragelement gerichtet, insbesondere auf die untere Seite des Tragelements, wirkt die Wärme von innen und damit direkt im Kontaktbereich zwischen dem Tragelement und dem wischblattseitigen Teil und verbessert damit den Verbund.

Besonders einfach kann die Wärme eingebracht werden, wenn sie in Form von geblasener Heißluft auf die Stellen gerichtet wird, die erwärmt werden sollen.

Ist es notwendig, die Wärme möglichst ohne weitere Einflüsse einzubringen, kann die Wärmebehandlung in Form von Wärmestrahlung erfolgen. Ist aber auch möglich, beispielsweise das Tragelement, sofern dieses aus einem Metall besteht, induktiv zu erwärmen und so die Wärme gezielt von innen nach außen in einem definierten Bereich zu leiten.

Erfolgt die Wärmebehandlung mittels einer heißen Platte, so kann diese lediglich in einem Abstand von den zu erwartenden Teilen gehalten werden oder auch in den direkten Kontakt gelangen. Im Letzteren Fall, ist es möglich formgebenden auf die Elemente des Tragelements und/oder des wischblattseitigen Teils der Anschlussvorrichtung einzuwirken und den Verbund zu verbessern.

Sehr schonend kann die Wärmebehandlung über ein Wärmebad erfolgen, durch das zumindest die zu erwärmenden Teile gezogen werden.

Soll eine möglichst gleichmäßige Erwärmung des gesamten Tragelement stattfinden, kann das Tragelement in einen Wärmeofen eingestellt werden.

Bevorzugt werden die erwärmten Teile im Anschluss an die Wärmebehandlung formgebenden bearbeitet, insbesondere aufeinander gepresst. Dadurch verringern sich die Spalte und es ergibt sich eine kraftschlüssige und oder formschlüssige Verbindungen. Während des aufeinander Treffens kann bereits eine Kühlung der erwärmten Teile stattfinden, so dass eine tretende Formgebung erreicht wird.

Die Verbindung zwischen Tragelement und dem wischblattseitigen Teil der Anschlussvorrichtung kann verbessert werden, wenn in den Bereich zwischen diesen Teilen ein Stoff eingebracht ist, der während der Wärmebehandlung aushärtet, und/oder aufquillt und/oder verklebt. Dieser Stoff kann sich dann in kleinsten Ritzen verkrallen und den Verbund erheblich verbessern.

Das Aufbringen des wischblattseitigen Teils der Anschlussvorrichtung auf das Tragelement insbesondere vor der Wärmebehandlung gelingt dann besonders einfach, wenn das Tragelement aus zwei beabstandeten Federschienen besteht beziehungsweise solche aufweist, die vor dem Aufschieben des wischblattseitigen Teils aneinander angelegt werden und nach dem Positionieren des wischblattseitigen Teils auf den konkreten Abstand gebracht, also insbesondere auseinander geschoben werden.

Ein erfindungsgemäßes Wischblatt zum Wischen von Scheiben mit den Merkmalen des Anspruchs 14 hat den Vorteil, dass es sehr einfach hergestellt werden kann, weil die Verbindung zwischen dem Tragelement und dem wischblattseitigen Teil der Anschlussvorrichtung durch eine Wärmebehandlung in diesem Bereich deutlich verbessert wird. Dies ist deshalb besonders wichtig, weil während des Wischbetriebs insbesondere bei trockener Scheibe oder wenn Schnee auf der Scheibe liegt erhebliche Drehmomente zwischen dem Tragelement und dem wischblattseitigen Teil der Anschlussvorrichtung vorherrschen. Diese Drehmomente sind auch nicht konstant sondern regelmäßig wechselnd.

Die zwischen dem Tragelement und dem wischblattseitigen Teil der Anschlussvorrichtung vorherrschende lichte Weite sollte, dass die Wärmebehandlung effektiv wirkt, in einem

Toleranzband von 0 mm bis 0,5 mm, vorzugsweise von 0 mm bis 0,2 mm, mindestens jedoch von 0 mm bis 0,5 mm liegen.

Die Maßhaltigkeit der Anordnung kann dann einfach eingehalten werden, wenn die beabstandeten Federschienen an deren enden von Endkappen abgedeckt sind, wobei mindestens eine Endkappe einen Abstandhalter aufweist.

Eine einfache Montage ergibt sich, wenn die Anschlussvorrichtung im Bereich der Ansätze Anlaufschrägen aufweist, so dass ein einfaches einfädeln der Federschienen in diesem Bereich gewährleistet ist.

### Zeichnung

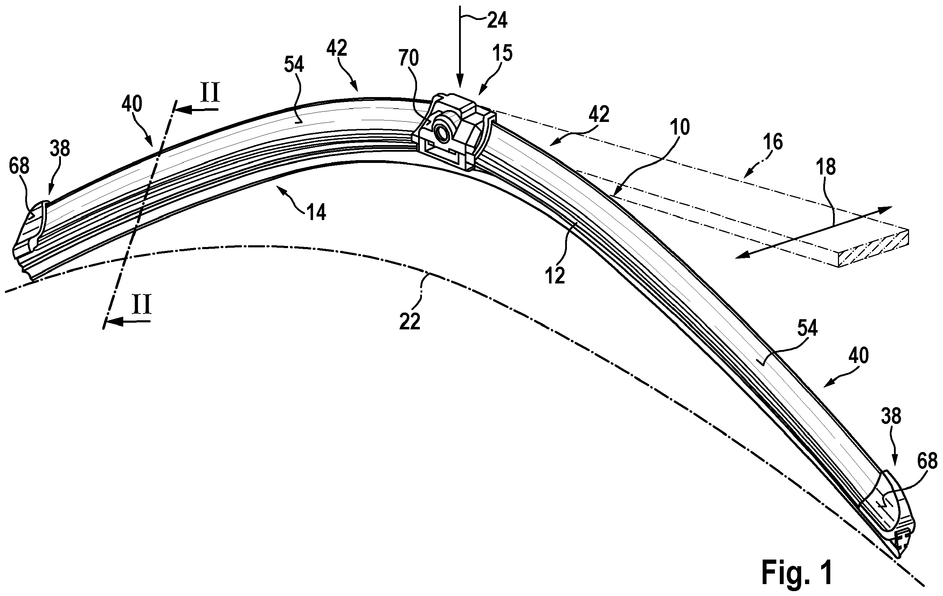

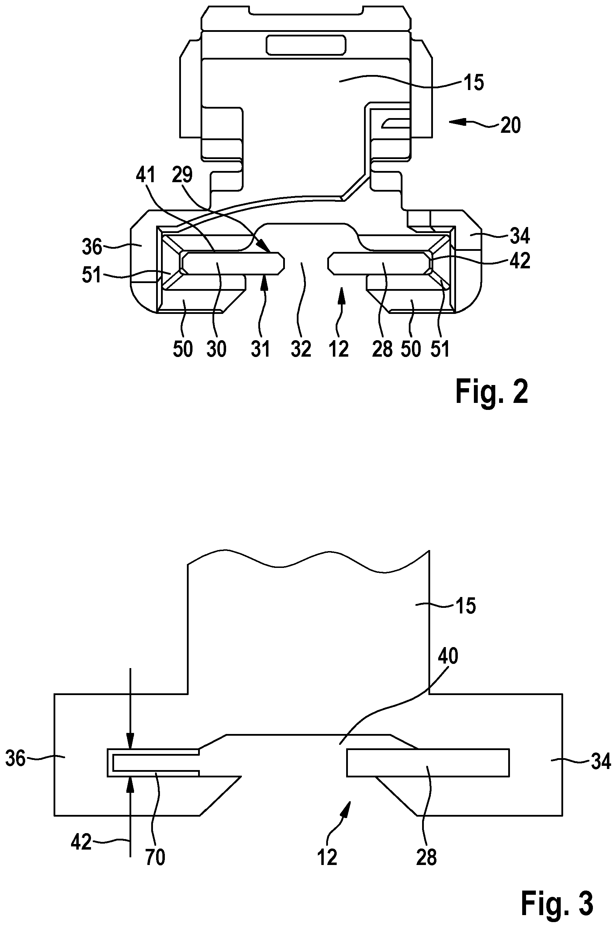

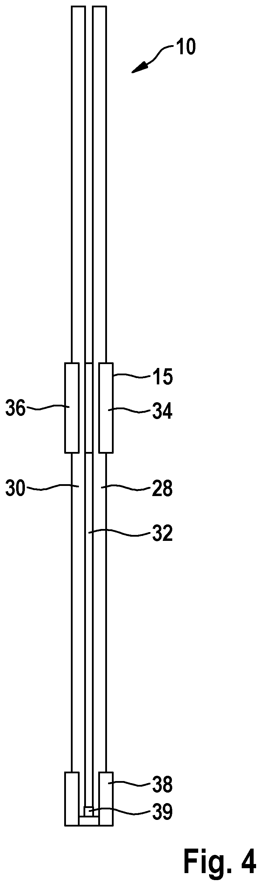

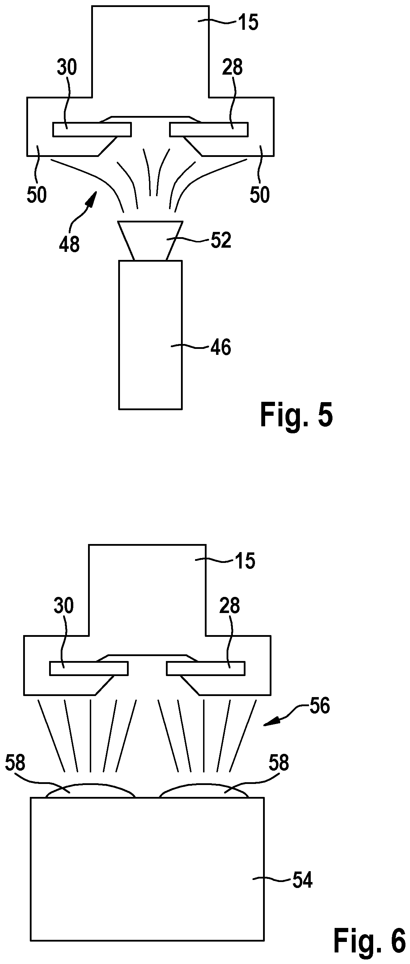

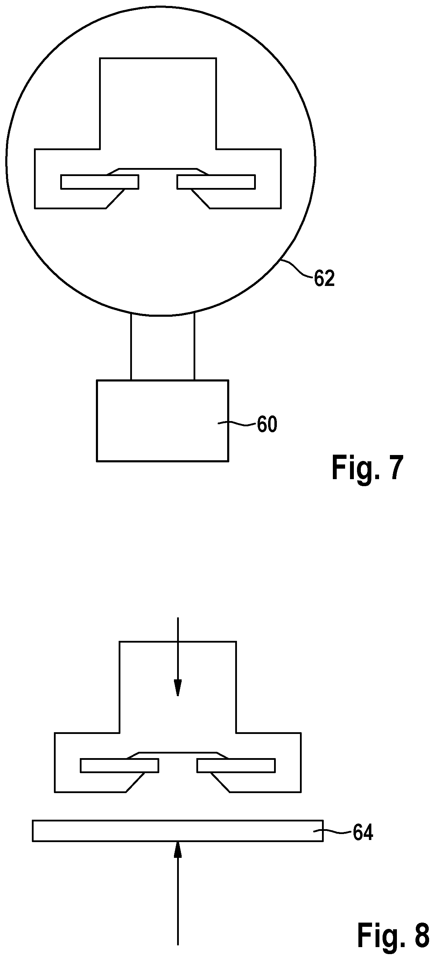

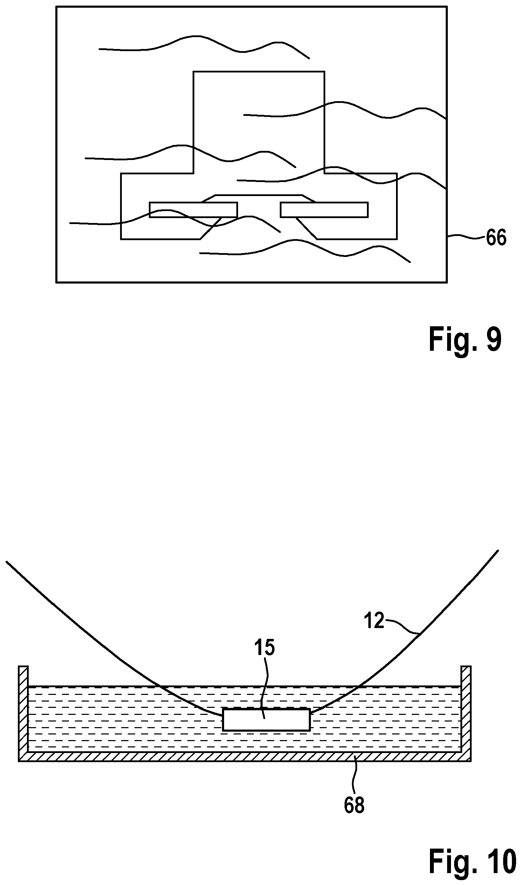

In der Zeichnung zeigen: Figur 1 ein erfindungsgemäßes Wischblatt in perspektivischer Darstellung mit strichpunktiert angedeutetem Wischerarm und strichpunktiert angedeuteter Oberfläche einer Windschutzscheibe, Fig. 2 zeigt eine Ansicht nach II-II in Fig. 1, Fig. 3 eine schematische Darstellung der Ansicht nach Fig. 2 mit nur einer Federschiene, Fig. 4 eine schematische Ansicht in Blickrichtung IV in Fig. 1 mit nur einer Endkappe, Fig. 5 eine schematische Ansicht entsprechend Fig. 2 eines Ausführungsbeispieles mit einem Warmluftgebläse, Fig. 6 entsprechend Fig. 5 mit einer Wärmestrahlungsquelle, Fig. 7 entsprechend Fig. 5 mit einer Induktionserwärmungseinheit, Fig. 8 entsprechend Fig. 5 mit einer Heizfläche, Fig. 9 entsprechend Fig. 5 in einem Wärmeofen und Fig. 10 eine schematische seitliche Darstellung eines erfindungsgemäßen Wischblatts in einem Wärmebad.

### Beschreibung der Ausführungsbeispiele

Ein in Figur 1 gezeigtes Wischblatt 10 weist ein bandartig langgestrecktes, federelastisches Tragelement 12 auf (Figuren 1 und 2), an dessen unteren, der Scheibe zugewandten Bandseite 13 eine langgestreckte, gummielastische Wischleiste 14 längsachsenparallel befestigt ist. An der oberen, von der Scheibe abgewandten Bandseite 11 des auch als Federschiene zu bezeichnenden Tragelements 12 ist in dessen Mittelabschnitt das wischblattseitige Teil 15 einer Anschlussvorrichtung angeordnet, mit deren Hilfe das Wischblatt 10 gelenkig mit einem in Figur 1 strichpunktiert angedeuteten Wischerarm 16 lösbar verbunden werden kann. Der in Richtung eines Doppelpfeils 18 in Figur 1 pendelnd angetriebenen Wischerarm 16 ist in Richtung eines Pfeils 24 zur zu wischenden Scheibe - beispielsweise zur Windschutzscheibe eines Kraftfahrzeugs belastet - deren Oberfläche in Figur 1 durch eine strichpunktierte Linie 22 angedeutet ist. Da die Linie 22 die stärkste Krümmung der Scheibenoberfläche darstellen soll ist klar ersichtlich, dass die Krümmung des mit seinen beiden Enden an der Scheibe anliegenden, noch unbelasteten Wischblatts stärker ist als die maximale Scheibenkrümmung (Figur 1). Unter dem Anpressdruck (Pfeil 24) legt sich das Wischblatt 10 mit seiner Wischlippe 26 über seine gesamte Länge an der Scheibenoberfläche 22 an. Dabei baut sich im aus Metall gefertigten, federelastischen Tragelement 12 eine Spannung auf, welche für eine ordnungsgemäße Anlage der Wischleiste 14 beziehungsweise der Wischlippe 26 über deren gesamte Länge an der Scheibenoberfläche 22 sowie für eine gleichmäßige Verteilung des Anpressdrucks (Pfeil 24) sorgt.

Im Folgenden soll nun auf die besondere Ausgestaltung des erfindungsgemäßen Wischblatts näher eingegangen werden.

In Fig. 2 ist erkennbar, dass das Tragelement 12 aus zwei, voneinander getrennten Federleisten 28 und 30 aufgebaut ist, die zueinander beabstandet sind und einen Spalt 32 begründen. Die Anschlussvorrichtung 15 weist in einem unteren Bereich zwei u-förmige Aufnahmen 34 und 36 auf, in denen die Federleisten 28 und 30 aufgenommen sind. Die Aufnahmen 34 und 36 umfassen die Federleisten 28 und 30 jeweils über einen größeren Teil ihres Querschnitt, wobei der mit dem Wischerarm 16 korrespondierende Teil der Anschlussvorrichtung 15 auf der konvexen Seite 29 des Tragelements 12 angeordnet ist, während die konkave Seite 31 dieser gegenüberliegt. Zwischen den Federleisten 28, 30 und der jeweiligen Aufnahme 34, 36 besteht ein kleiner Spalt 41.

In Fig. 3 ist die Anschlussvorrichtung 15 schematisch dargestellt, wobei in der Aufnahme 34 die entsprechende Federleiste 28 eingezeichnet ist, während die Federleiste 30, nicht in der entsprechenden Aufnahme 36 liegt, so dass die lichte Weite 42 zu sehen ist. Es ist erkennbar, dass die Aufnahmen 34 und 36 die Federleisten 28 und 30 passend umgreifen, wobei auf die vorliegenden Toleranzen später eingegangen wird. Im Bereich oberhalb der Federleisten 28 und 30 sowie oberhalb des Spalts 32 weist die Anschlussvorrichtung 15 eine Aussparung 40 auf, in die, wenn das Wischblatt 10 zusammengebaut ist, ein Kopfteil einer Wischleiste 14 zu liegen kommt.

Das in Fig. 4 von unten dargestellte Wischblatt 10, das ohne die Wischleiste 14 bzw. Wischerlippe 26 gezeichnet ist, zeigt die Federleisten 28 und 30, den Spalt 32 sowie die Aufnahmen 34 und 36 der Anschlussvorrichtung 15. Es ist erkennbar, dass bei dieser Ausführungsform des Wischblatts 10 die Federleisten 28 und 30 vollständig voneinander getrennt sind und lediglich durch die Anschlussvorrichtung 15 bzw. über Endkappen 38, von denen in Fig. 4 nur eine an einem Ende gezeichnet ist, zusammengehalten werden. Zumindest eine der Endkappen 38 weist einen Abstandhalter 39 auf, der in montiertem Zustand die Federleisten 28, 30 auf dem Abstand des Spalts 32 hält.

Bei dem erfindungsgemäßen Verfahren wird nun das wischblattseitige Teil 15 der Anschlussvorrichtung 20 auf das Tragelement 12 aufgeschoben, wozu das wischblattseitige Teil 15 im Bereich der Aufnahmen 34, 36 eine lichte Weite 42 aufweist, die gleich oder geringfügig größer ist als die Dicke der Federleisten 28, 30. Dazu ist die lichte Weite ungefähr 0 mm bis mindestens 0,05 mm größer als die Dicke der Federleisten 28, 30. Die Montage wird einfacher, wenn das zulässige Toleranzband im Bereich von 0 mm bis 0,2 mm liegt, wobei dann jedoch erhöhte Anforderungen an die Wärmebehandlung stellen sind. Eine sehr einfache Montage kann erfolgen, wenn das Toleranzband zwischen 0 mm bis 0,5 mm liegt wobei dann davon auszugehen ist, dass zusätzliche Maßnahmen zur Verringerung des Spalts nach der Wärmebehandlung notwendig werden. Insbesondere bei kleinen Spalten 41 ist die Montage des wischblattseitigen Teils 15 auf die Federleisten 28, 30 der Art zu vollziehen, dass die Federleisten 28, 30 unter Verringerung der Spaltes 32 in die lichte Weiten nebeneinander gehalten werden, das wischblattseitige Teil 15 aufgeschoben wird und erst dann die Federleisten 28, 30 auf denen Abstand 32 gebracht und damit in die Aufnahmen eingeschoben werden. Dieses Verfahren kann natürlich auch bei den anderen Toleranzen von Vorteil sein.

Um das ineinander Einführen von wischblattseitigen Teil und Federschienen 28, 30 zu erleichtern, weisen die Aufnahmen 34, 36 im Bereich der krallenartigen Ansätze 50 Anlaufschrägen 51 auf.

Sobald Tragelement 12 und wischblattseitiges Teil 15 zueinander die richtige Position eingenommen haben, wird mit einer Wärmebehandlung begonnen, die entweder auf das wischblattseitige Teil 15 oder auf das Tragelement 12 oder auch auf beide Elemente gerichtet ist. Dadurch verändert sich die lichte Weite 44 der Art, dass sie den Spalt 41 ganz oder zumindest weit gehend verschließt.

In Fig. 5 ist dargestellt, wie mit einem Heißluftgebläse 46 ein heißer Luftstrom 48 von unten auf die Aufnahmen 34 und 36 bzw. direkt auf krallenartigen Ansätze 50 geblasen wird. Das Heißluftgebläse 46 weist dazu einen Richtungsgeber 52 auf, der Ausführungsbeispiel trichterförmig ausgestaltet ist. Dadurch wird der heißer Luftstrom 48 gleichzeitig auf beide krallenartigen Ansätze 50, auf die im Spalt 32 herausragenden Federleisten 28, 30 und in die Aussparung 40 gerichtet. Der gesamte Bereich wird damit gleichmäßig erwärmt.

Das Heißluftgebläse 46 kann in seiner Ausdehnung entsprechend der Länge des wischblattseitigen Teils 15 in Längsrichtung des Wischblatts gesehen angepasst sein oder auch kleiner gehalten und in Längsrichtung verfahren werden.

In einem weiteren Ausführungsbeispiel nach Fig. 6 ist als Wärmequelle ein Wärmestrahler 54 dargestellt, von dem ausgehend Wärmestrahlung 56 auf den unteren Bereich des Wischblatts 10 gerichtet ist. Die Wärmestrahlung 56 wird im Ausführungsbeispiel durch zwei Heizstrahler 58 erzeugt, wie sie beispielsweise in sogenannten Reflow -Öfen beim Löten eingesetzt werden. Die Wärmestrahlung 56 besitzt gegenüber dem heißen Luftstrom 48 den Vorteil, dass keine Verwirbelungen, Turbulenzen und damit keine Kräfte auf das Wischblatt 10 entstehen. Nachteilig kann es jedoch sein, dass die Wärme insgesamt nur direkt von unten einwirkt, während sich der heiße Luftstrom 48 bis in die Aussparung 40 fortpflanzen kann.

Einen anderen Weg geht ein Ausführungsbeispiel nach Fig. 7, bei dem die Wärme mittels einer Induktionsvorrichtung 60 in den metallischen Federleisten 28, 30 des Tragelements 12 erzeugt wird. Dazu wird das bereits zusammengesetzte Ensemble aus den Federleisten 28, 30 und dem wischblattseitigen Teil 15 durch eine Induktionsschleife 62 bewegt bzw. die Induktionsschleife 62 über das Ensemble geführt, während ein hochfrequenter Wechselstrom an der Induktionsschleife 62, die bevorzugt an Spule ausgebildet ist, anliegt.

In Fig. 8 ist wieder das bereits zusammengesetzte Ensemble aus den Federleisten 28, 30 und dem wischblattseitigen Teil 15 dargestellt, unter dem eine heiße Platte 64 positioniert ist. Wird ein Abstand zwischen der Platte 64 und den krallenartigen Ansätzen 50 eingehalten, so wird die Wärme ähnlich dem Ausführungsbeispiel nach Fig. 6 mittels Wärmestrahlung übertragen. Es ist jedoch auch möglich, die Platte 64 mit Kraft auf die krallenartigen Ansätze 50 zu pressen, so dass zusätzlich zur Erwärmung ein formgebender Druck entsteht, der den Spalt 41 bzw. die Spalte 41 verschließt.

In Fig. 9 ist das zusammengesetzte Ensemble aus den Federleisten 28, 30 und dem wischblattseitigen Teil 15 in einem Wärmeofen 66 positioniert, indem eine definierte Atmosphäre vorherrschen kann. In Fig. 10 ist das zusammengesetzte Ensemble aus den Federleisten 28, 30 und dem wischblattseitigen Teil 15 in einen Wärmebad 68 getaucht.

Je nach Art der Wärmeeinbringung und/oder der Vorbereitung der Federleisten 28, 30 bzw. des wischblattseitigen Teils 15 können sich die Spalte 41 von selbst verschließen oder müssen durch zusätzlichen Kraftaufwand verschlossen werden. Ist dieser weitere Schritt notwendig, kann im einfachsten Fall, wie das im Beispiel nach Fig. 8 zu sehen ist, eine mehr oder weniger stark erwärmte Platte am wischblattseitigen Teil 15 eingepresst werden. Die Platte kann eine Temperatur aufweisen, die zusätzlich Wärme einbringt oder bereits ein Abkühlungsvorgang in Gang gesetzt. Durch die Abkühlung wird eine bleibende Formänderung erzielt.

In allen Verfahren nach den Ausführungsbeispielen ist es möglich, einen zusätzlichen Stoff 70 in die lichte Weite 42 einzubringen, der während der Wärmebehandlung aushärtet und/oder aufquillt und/oder die Federleisten 28, 30 mit dem wischblattseitigen Teil 15 verkleben.

## Patentansprüche

1. Verfahren zum Herstellen eines Wischblatts mit einem Tragelement (12) und einer Anschlussvorrichtung (20), die mit einem wischblattseitigen Teil (15) am Tragelement (12) befestigt ist, das krallenartige Ansätze (50) aufweist, die das Tragelement (12) zumindest bereichsweise umgreifen, wobei das wischblattseitige Teil (15) mit einer nur geringfügig größeren lichten Weite (42) als die Dicke des Tragelements (12) auf das Tragelement (12) aufgeschoben und positioniert wird und nach dem Positionieren wärmebehandelt wird, **dadurch gekennzeichnet, dass** die Wärmebehandlung sicherstellt, dass sich die Elemente des Tragelements (12) und des wischblattseitigen Teils (15) eng aneinander anlegen und einen kraftschlüssigen Verbund schaffen.

2. Verfahren nach Anspruch 1, **dadurch gekennzeichnet, dass** die Wärmebehandlung von einer unteren Seite auf die krallenartigen Ansätze (50) wirkt.

3. Verfahren nach einem der vorhergehenden Ansprüche, **dadurch gekennzeichnet, dass** die Wärmebehandlung von einer unteren Seite auf das Tragelement (12) wirkt.

4. Verfahren nach einem der vorhergehenden Ansprüche, **dadurch gekennzeichnet, dass** die Wärmebehandlung in Form von geblasener Heißluft (48) erfolgt.

5. Verfahren nach einem der vorhergehenden Ansprüche, **dadurch gekennzeichnet, dass** die Wärmebehandlung in Form von Wärmestrahlung (56) erfolgt.

6. Verfahren nach einem der vorhergehenden Ansprüche, **dadurch gekennzeichnet, dass** die Wärmebehandlung in induktiver Form (60, 62) erfolgt.

7. Verfahren nach einem der vorhergehenden Ansprüche, **dadurch gekennzeichnet, dass** die Wärmebehandlung mittels einer heißen Platte (64) erfolgt.

8. Verfahren nach einem der vorhergehenden Ansprüche, **dadurch gekennzeichnet, dass** die Wärmebehandlung über ein Wärmebad (68) erfolgt.

9. Verfahren nach einem der vorhergehenden Ansprüche, **dadurch gekennzeichnet, dass** für die Wärmebehandlung das Tragelement (12) in einen Wärmeofen (66) gebracht wird.

10. Verfahren nach einem der vorhergehenden Ansprüche, **dadurch gekennzeichnet, dass** während oder nach der Wärmebehandlung die Ansätze (50) gepresst werden.

11. Verfahren nach einem der vorhergehenden Ansprüche, **dadurch gekennzeichnet, dass** nach der Wärmebehandlung die Ansätze (50) durch eine kühlenden Vorrichtung gepresst und abgekühlt werden.

12. Verfahren nach einem der vorhergehenden Ansprüche, **dadurch gekennzeichnet, dass** in der lichten Weite (42) ein Stoff (70) eingebracht ist, der während der Wärmebehandlung aushärtet und/oder aufquillt und/oder verklebt.

13. Verfahren nach einem der vorhergehenden Ansprüche, **dadurch gekennzeichnet, dass** das Tragelement (12) zwei beabstandete Federschienen (28, 30) aufweist, die vor dem Aufschieben des wischblattseitigen Teils (15) aneinander angelegt werden und nach dem Positionieren des wischblattseitigen Teils (15) auf den korrekten Abstand (32) gebracht werden.

14. Wischblatt, hergestellt nach einem Verfahren der vorhergehenden Ansprüche.

## Claims

1. Method for producing a wiper blade having a supporting element (12) and a connection device (20), which is fastened to the supporting element (12) by means of a part (15) on a wiper blade side, said part having claw-like shoulders (50) which engage at least in regions around the supporting element (12), wherein the part (15) on the wiper blade side is pushed onto and positioned on the supporting element (12) with an only slightly larger clear width (42) than the thickness of the supporting element (12) and, after the positioning, is heat treated, **characterized in that** the heat treatment ensures that the elements of the supporting element (12) and of the part (15) on the wiper blade side lie tightly against one another and produce a force-fitting assembly.

2. Method according to Claim 1, **characterized in that** the heat treatment acts on the claw-like shoulders (50) from a lower side.

3. Method according to either of the preceding claims, **characterized in that** the heat treatment acts on the supporting element (12) from a lower side.

4. Method according to one of the preceding claims, **characterized in that** the heat treatment takes place in the form of blown hot air (48).

5. Method according to one of the preceding claims, **characterized in that** the heat treatment takes place in the form of heat radiation (56).

6. Method according to one of the preceding claims, **characterized in that** the heat treatment takes place in inductive form (60, 62).

7. Method according to one of the preceding claims, **characterized in that** the heat treatment takes place by means of a hot plate (64).

8. Method according to one of the preceding claims, **characterized in that** the heat treatment takes place by means of a heat bath (68).

9. Method according to one of the preceding claims, **characterized in that** the supporting element (12) is brought into a heating furnace (66) for the heat treatment.

10. Method according to one of the preceding claims, **characterized in that** the shoulders (50) are pressed during or after the heat treatment.

11. Method according to one of the preceding claims, **characterized in that**, after the heat treatment, the shoulders (50) are pressed and cooled by a cooling device.

12. Method according to one of the preceding claims, **characterized in that** a substance (70) which hardens and/or swells and/or adhesively bonds during the heat treatment is introduced into the clear width (42).

13. Method according to one of the preceding claims, **characterized in that** the supporting element (12) has two spaced-apart spring rails (28, 30) which are placed on one another before the part (15) on the wiper blade side is pushed on and are brought to the correct spacing (32) after the part (15) on the wiper blade side has been positioned.

14. Wiper blade produced according to a method of the preceding claims.

## Revendications

1. Procédé de fabrication d'un balai d'essuie-glace comprenant un élément de support (12) et un dispositif de raccordement (20) qui est fixé à une partie côté balai d'essuie-glace (15) au niveau de l'élément de support (12) qui comporte des saillies (50) en forme de griffe qui enserrent l'élément de support (12) au moins par endroits,
la partie côté balai d'essuie-glace (15) qui a une largeur intérieure (42) légèrement supérieure à l'épaisseur de l'élément de support (12) étant glissée sur l'élément de support (12) et positionnée et traitée thermiquement après le positionnement, **caractérisée en ce que** le traitement thermique garantit que les éléments de l'élément de support (12) et de la partie côté balai d'essuie-glace (15) viennent étroitement en appui les uns sur les autres et créent une liaison en force.

2. Procédé selon la revendication 1, **caractérisé en ce que** le traitement thermique agit depuis un côté inférieur sur les saillies (50) en forme de griffe.

3. Procédé selon l'une des revendications précédentes, **caractérisé en ce que** le traitement thermique agit sur l'élément de support (12) depuis un côté inférieur.

4. Procédé selon l'une des revendications précédentes, **caractérisé en ce que** le traitement thermique est effectué sous forme d'air chaud soufflé (48).

5. Procédé selon l'une des revendications précédentes, **caractérisé en ce que** le traitement thermique est effectué sous forme de rayonnement thermique (56).

6. Procédé selon l'une des revendications précédentes, **caractérisé en ce que** le traitement thermique est effectué par induction (60, 62).

7. Procédé selon l'une des revendications précédentes, **caractérisé en ce que** le traitement thermique est effectué au moyen d'une plaque chaude (64).

8. Procédé selon l'une des revendications précédentes, **caractérisé en ce que** le traitement thermique est effectué par le biais d'un bain thermique (68).

9. Procédé selon l'une des revendications précédentes, **caractérisé en ce que** l'élément de support (12) est amené dans un four de chauffage (66) pour effectuer le traitement thermique.

10. Procédé selon l'une des revendications précédentes, **caractérisé en ce que** les saillies (50) sont pressées pendant ou après le traitement thermique.

11. Procédé selon l'une des revendications précédentes, **caractérisé en ce que**, après le traitement thermique, les saillies (50) sont pressées et refroidies par un dispositif de refroidissement.

12. Procédé selon l'une des revendications précédentes, **caractérisé en ce qu'**une substance (70) est introduite dans la largeur intérieure (42), laquelle substance durcit et/ou gonfle et/ou colle pendant le traitement thermique.

13. Procédé selon l'une des revendications précédentes, **caractérisé en ce que** l'élément de support (12) comporte deux rails à ressort espacés (28, 30) qui viennent en appui l'un contre l'autre avant de faire glisser la partie côté balai d'essuie-glace (15) et sont amenés à la bonne distance (32) après le positionnement de la partie côté balai d'essuie-glace (15).

14. Balai d'essuie-glace fabriqué par un procédé selon les revendications précédentes.
